(19) Europäisches Patentamt
European Patent Office
Office européen des brevets

(11) **EP 3 663 107 B1**

(12) **EUROPÄISCHE PATENTSCHRIFT**

(45) Veröffentlichungstag und Bekanntmachung des Hinweises auf die Patenterteilung:
**07.12.2022 Patentblatt 2022/49**

(21) Anmeldenummer: **19203760.4**

(22) Anmeldetag: **17.10.2019**

(51) Internationale Patentklassifikation (IPC):
***B60C 11/24*** *(2006.01)*

(52) Gemeinsame Patentklassifikation (CPC):
**B60C 11/246**

(54) **SYSTEM, FAHRZEUG UND VERFAHREN**

SYSTEM, VEHICLE AND METHOD

SYSTÈME, VÉHICULE ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2018 DE 102018221081**

(43) Veröffentlichungstag der Anmeldung:
**10.06.2020 Patentblatt 2020/24**

(73) Patentinhaber: **Continental Reifen Deutschland GmbH**
**30165 Hannover (DE)**

(72) Erfinder: **Sahlmüller, Baldo**
**30419 Hannover (DE)**

(74) Vertreter: **Continental Corporation**
**c/o Continental AG**
**Intellectual Property**
**Postfach 169**
**30001 Hannover (DE)**

(56) Entgegenhaltungen:
**WO-A1-2010/046872      DE-A1-102015 216 212**
**JP-A- 2009 061 917      JP-A- 2013 136 297**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein System und ein Verfahren zur Bestimmung einer Reifenprofiltiefe eines Fahrzeugreifens. Außerdem betrifft die Erfindung ein Kraftfahrzeug mit dem zuvor genannten System.

Es ist bekannt, einen Beschleunigungssensor an der Reifeninnenseite eines Kraftfahrzeugs zu befestigen, wobei der Beschleunigungssensor zur Erfassung einer auf den Reifen, insbesondere auf die zugehörige Lauffläche, wirkende Beschleunigung in Radialrichtung ausgebildet ist. Von dem Beschleunigungssensor wird ein Messsignal erzeugt, das die von dem Beschleunigungssensor erfasste Beschleunigung repräsentiert. Das Messsignal kann an ein System übertragen werden, dass zur Ermittlung einer Profiltiefe des Fahrzeugreifens basierend auf der von dem Beschleunigungssensor erfassten Beschleunigung ausgebildet ist.

Die JP2013136297A offenbart eine Auswertung einer Reifenprofiltiefe mittels Radialbeschleunigungssensoren, wobei Beschleunigungsgradienten für diesen Zweck ausgewertet werden.

Die DE102015216212A1 offenbart eine Auswertung einer Profiltiefe mittels Radialbeschleunigungssensoren, wobei Tangentialbeschleunigungen für diesen Zwecks ausgewertet werden.

Wird ein Fahrzeugreifen mit einer bestimmten Profiltiefe verwendet, wobei der Fahrzeugreifen einen Beschleunigungssensor zur Erfassung der auf den Fahrzeugreifen wirkenden Beschleunigung in Radialrichtung aufweist, können von dem Beschleunigungssensor sehr unterschiedliche Beschleunigungswerte erfasst werden, und zwar abhängig von dem jeweiligen Verwendungszustand des Fahrzeugreifens. Insbesondere die Rotationsgeschwindigkeit des Fahrzeugreifens hat einen Einfluss auf die von dem Beschleunigungssensor erfasste Beschleunigung in Radialrichtung. In der Praxis wurde festgestellt, dass bei der Ermittlung der Profiltiefe unter Verwendung der von dem Beschleunigungssensor erfasste Beschleunigung jedoch ohne Berücksichtigung weiterer Eigenschaften des Fahrzeugreifens und/oder weiterer, den Fahrzeugreifen zumindest indirekt kennzeichnenden Kenngrößen große Abweichungen zwischen der tatsächlich vorhandenen Profiltiefe und der mittels des bekannten Systems ermittelten Profiltiefe auftreten können.

Der Erfindung liegt deshalb die Aufgabe zu Grunde, ein System und ein Verfahren zur Bestimmung einer Reifenprofiltiefe eines Fahrzeugreifens sowie ein Fahrzeugreifen mit dem System bereit zu stellen, die jeweils eine besonders präzise Bestimmung der Reifenprofiltiefe eines Fahrzeugreifens erlauben.

Gelöst wird die Aufgabe gemäß einem ersten Aspekt der Erfindung durch ein System mit den Merkmalen des Anspruchs 1. Vorgesehen ist also ein System zur Bestimmung einer Reifenprofiltiefe eines Fahrzeugreifens. Das System weist eine Signalempfangsschnittstelle, eine erste Prozessoreinheit und eine Speichereinheit auf. Die Signalempfangsschnittstelle ist zum Empfang eines Messsignals eines Beschleunigungssensors des Fahrzeugreifens ausgebildet, wobei das Messsignal eine auf ein Reifenprofil eines Laufstreifens des Fahrzeugreifens wirkende, radiale Beschleunigung zumindest indirekt repräsentiert. Von der Speichereinheit ist eine Referenzprofiltiefe des Reifenprofils gespeichert. Die erste Prozessoreinheit ist konfiguriert, basierend auf dem Messsignal ein Prozesssignal zu ermitteln, das einen Beschleunigungsgradienten der auf das Reifenprofil des Laufstreifens des Fahrzeugreifens oder der auf einen Innenliner des Fahrzeugreifens wirkenden, radialen Beschleunigung zumindest indirekt repräsentiert. Die erste Prozessoreinheit ist konfiguriert, eine Umlaufzeit des Fahrzeugreifens basierend auf dem Messsignal und/oder dem Prozesssignal zu ermitteln. Die erste Prozessoreinheit ist konfiguriert, basierend auf dem Prozesssignal einen ersten Parameter zu ermitteln, der einen maximalen Beschleunigungsgradient während der Umlaufzeit, einen minimalen Beschleunigungsgradient während der Umlaufzeit oder einen Mittelwert aus dem minimalen und maximalen Beschleunigungsgradient während der Umlaufzeit zumindest indirekt repräsentiert. Die erste Prozessoreinheit ist konfiguriert, basierend auf dem Prozesssignal einen zweiten Parameter zu ermitteln, der entweder einen Zeitabstand zwischen dem maximalen und minimalen Beschleunigungsgradient während der Umlaufzeit oder ein Verhältnis zwischen den Zeitabstand und der Umlaufzeit zumindest indirekt repräsentiert. Außerdem ist die erste Prozessoreinheit oder eine optionale, zweite Prozessoreinheit des Systems konfiguriert, die Reifenprofiltiefe des Reifenprofils des Laufstreifens des Fahrzeugreifens basierend auf der Referenzprofiltiefe, dem ersten Parameter und dem zweiten Parameter zu bestimmen.

Das System bietet den Vorteil, dass die Reifenprofiltiefe besonders präzise bestimmt werden kann. Bevor die Vorteile der Erfindung weiter erörtert werden, soll zunächst auf das System weiter eingegangen werden.

Das System kann vorzugsweise als eine Vorrichtung ausgebildet sein. In diesem Fall kann das System besonders einfach verbaut und/oder gehandhabt werden. Es ist aber auch möglich, dass das System einen Bestandteil eines bereits bestehenden Systems des Fahrzeugreifens und/oder eines Fahrzeugs gebildet. Die ermöglicht die Einsparung von Bauteilen. Es ist aber auch möglich, dass das System als Vorrichtung dem Fahrzeugreifen und/oder dem Fahrzeug zugeordnet ist. Damit ist das System besonders einfach für einen Fahrzeugreifen und/oder ein Fahrzeug einsetzbar.

Das System weist die Signalempfangsschnittstelle auf. Mittels der Signalempfangsschnittstelle kann das System das Messsignal des Beschleunigungssensors und/oder einer dem Beschleunigungssensor zugeordneten Signalsendeeinheit empfangen. Dabei kann die Signalsendeeinheit einen Teil des Beschleunigungssensors bilden. Das Messsignal repräsentiert die in Radialrichtung auf den Laufstreifen wirkende Beschleunigung. Diese kann direkt oder indirekt mittels des Beschleunigungssensors erfasst sein. So kann der Beschleunigungssensor beispielsweise an der Reifeninnenseite, insbesondere an dem Innenliner des Fahrzeugreifens, befestigt sein. In diesem Fall erfährt der Beschleunigungssensor zumindest im Wesentlichen die gleiche Beschleunigung wie der Laufstreifen des Fahrzeugreifens und/oder das Profil des Laufstreifens des Fahrzeugreifens. Der Fahrzeugreifen kann auch kurz als Reifen bezeichnet sein. Der Laufstreifen des Fahrzeugreifens weist radial außenseitig ein sogenanntes Reifenprofil auf, das auch kurz als Profil bezeichnet sein kann. Ein Reifenprofil weist oftmals Reifenblöcke auf, zwischen denen mindestens eine Vertiefung oder Ausnehmung ist. Die Höhe dieser jeweiligen Blöcke und/oder die Tiefe der Ausnehmung wird bzw. werden oftmals als Reifenprofiltiefe bezeichnet.

Ein neu gefertigter Fahrzeugreifen weist eine vorbestimmte Reifenprofiltiefe auf. Die Referenzprofiltiefe des Fahrzeugreifens kann deshalb beispielsweise von der Reifenprofiltiefe eines neu hergestellten Fahrzeugreifens bestimmt sein. Wird das System jedoch für einen bereits verwendeten Fahrzeugreifen eingesetzt, so kann der Fahrzeugreifen bereits einer Abnutzung unterliegen. In diesem Fall kann die Profiltiefe geringer sein, als bei dem neu hergestellten Zustand eines entsprechenden Fahrzeugreifens. Somit ist es ebenfalls möglich, dass die Referenzprofiltiefe des Reifenprofils des Fahrzeugreifens durch eine tatsächlich vorhandene und/oder ermittelte Tiefe des Reifenprofils zu einem vorbestimmten Zeitpunkt bestimmt ist. Die für den Fahrzeugreifen zu berücksichtigende Referenzprofiltiefe ist von der Speichereinheit des Systems gespeichert. Die Berücksichtigung der Referenzprofiltiefe für die Bestimmung der Reifenprofiltiefe des Fahrzeugreifens, wobei hierbei die tatsächlich vorhandene Reifenprofiltiefe des Fahrzeugreifens gemeint ist, hat sich als besonders hilfreich herausgestellt.

Die erste Prozessoreinheit des Systems kann durch eine Datenverarbeitungseinheit, insbesondere nach Art eines Datenverarbeitungsprozessors, ausgebildet sein. Die erste Prozessoreinheit kann zur Verarbeitung von Signalen und/oder Daten ausgebildet sein. So ist die erste Prozessoreinheit dazu konfiguriert, das Prozesssignal basierend auf dem Messsignal zu ermitteln, wobei das Prozesssignal den Beschleunigungsgradienten der auf das Reifenprofil oder den Innenliner des Fahrzeugreifens wirkenden, radialen Beschleunigung zumindest indirekt repräsentiert. Das Messsignal repräsentiert die auf den Laufstreifen oder den Innerliner wirkende radiale Beschleunigung zumindest indirekt. Die zeitliche, mathematische Ableitung der Beschleunigung wird als Beschleunigungsgradient bezeichnet. Somit kann die erste Prozessoreinheit zur Ermittlung des Beschleunigungsgradienten basierend auf der Beschleunigung, die von dem Messsignal zumindest indirekt repräsentiert ist, ausgebildet sein.

Rollt ein Fahrzeugreifen auf einem Untergrund ab, entsteht im Bereich der mit dem Untergrund in Kontakt stehenden Reifenaufstandsfläche eine Verformung des Fahrzeugreifens. Dieser Bereich wird auch als sogenannter Latschbereich bezeichnet. Beim Abrollen des Fahrzeugreifens auf dem Untergrund durchläuft eine Stelle des Laufstreifens also periodisch den Latschbereich. Mit anderen Worten entsteht beim Abrollen des Fahrzeugreifens auf dem Untergrund ein periodischer Umlauf des Laufstreifens des Fahrzeugreifens. Die Dauer eines Umlaufs des Laufstreifens des Fahrzeugreifens entspricht der Umlaufzeit des Fahrzeugreifens. Die erste Prozessoreinheit ist konfiguriert, die Umlaufzeit des Fahrzeugreifens basierend auf dem Messsignal und/oder dem Prozesssignal zu ermitteln. Da das Messsignal die auf den Laufstreifen des Fahrzeugreifens wirkende, radiale Beschleunigung zumindest indirekt repräsentiert, kann aus dem zeitlichen Verlauf des Messsignals ein periodisches Muster entnommen werden, so dass die Umlaufzeit des Fahrzeugreifens basierend auf diesem periodischen Muster ermittelbar ist. Der Beschleunigungsgradient weist ebenfalls ein periodisch auftretendes Muster beim Umlauf des Fahrzeugreifens auf, so dass auch aus diesem Muster die Umlaufzeit ermittelbar ist.

In der Praxis wurde festgestellt, dass der Beschleunigungsgradient einen Einfluss auf die Bestimmung der Reifenprofiltiefe hat. Es ist deshalb bevorzugt vorgesehen, dass der während eines Umlaufs auftretende Beschleunigungsgradient für die Bestimmung der Reifenprofiltiefe berücksichtigt wird. Dies kann beispielsweise durch die Berücksichtigung des maximalen Beschleunigungsgradienten während eines Umlaufs des Fahrzeugreifens erfolgen. Für den Umlauf des Fahrzeugreifens wurde bereits zuvor die Umlaufzeit des Fahrzeugreifens erläutert. Es ist deshalb bevorzugt vorgesehen, dass der maximale Beschleunigungsgradient während der Umlaufzeit eines Umlaufs des Fahrzeugreifens als ein erster Parameter zur Bestimmung der Reifenprofiltiefe berücksichtigt wird. Anstatt und/oder ergänzend zu dem maximalen Beschleunigungsgradient kann entsprechendes für den minimalen Beschleunigungsgradienten gelten. Somit kann der minimale Beschleunigungsgradient während der Umlaufzeit eines Umlaufs des Fahrzeugreifens als erster Parameter zur Bestimmung der Reifenprofiltiefe des Fahrzeugreifens berücksichtigt werden. Darüber hinaus hat es sich als vorteilhaft herausgestellt, wenn der Mittelwert aus dem maximalen und minimalen Beschleunigungsgradient während der Umlaufzeit eines Umlaufs des Fahrzeugreifens als erster Parameter zur Bestimmung der Reifenprofiltiefe des Fahrzeugreifens berücksichtigt wird. Bei dem minimalen Beschleunigungsgradienten handelt es sich vorzugsweise um den Betrag des minimalen Beschleunigungsgradienten. In Abhängigkeit der Verwendung des Fahrzeugreifens können der Wert des maximalen Beschleunigungsgradienten und des minimalen Beschleunigungsgradienten unterschiedlich groß sein. So sind der jeweilige Betrag des maximalen Beschleunigungsgradienten und der Betrag des minimalen Beschleunigungsgradienten bei einer großen Umlaufgeschwindigkeit des Fahrzeugreifens jeweils größer als bei einer kleinen Umlaufgeschwindigkeit des Fahrzeugreifens. Der zeitliche Abstand, der auch als Zeitabstand bezeichnet wird, zwischen dem Auftreten des maximalen Beschleunigungsgradienten und dem Auftreten des minimalen Beschleunigungsgradienten während der Umlaufzeit eines Umlaufs des Fahrzeugreifens kann bei einer hohen Umlaufgeschwindigkeit des Fahrzeugreifens kleiner sein als bei einer kleineren Umlaufgeschwindigkeit des Fahrzeugreifens. Es hat sich deshalb als vorteilhaft herausgestellt, wenn der zuvor genannte Zeitabstand zwischen dem maximalen und minimalen Beschleunigungsgradient während der Umlaufzeit direkt oder indirekt bei der Bestimmung der Reifenprofiltiefe des Fahrzeugreifens berücksichtigt wird. Es ist deshalb vorgesehen, dass der zweite Parameter beispielsweise den Zeitabstand zwischen dem Auftreten des maximalen und minimalen Beschleunigungsgradienten während der Umlaufzeit repräsentiert. Alternativ oder ergänzend kann der zweite Parameter ein Verhältnis zwischen dem Zeitabstand und der Umlaufzeit zumindest indirekt repräsentieren.

Aus den vorangegangen Erläuterungen ist für den Fachmann ersichtlich, dass der erste Parameter und der zweite Parameter sich gegenseitig beeinflussen können und/oder eine Abhängigkeit zueinander aufweisen können. Denn desto kleiner beispielsweise der Zeitabstand zwischen dem maximalen und minimalen Beschleunigungsgradient ist, desto größer kann beispielsweise der maximale Beschleunigungsgradient bzw. der Betrag des minimalen Beschleunigungsgradienten ausfallen. Die Berücksichtigung des ersten Parameters und des zweiten Parameters zur Bestimmung der Reifenprofiltiefe des Fahrzeugreifens hat sich deshalb besonders vorteilhaft herausgestellt, um den jeweiligen Einfluss des ersten bzw. zweiten Parameters bei der Bestimmung der Reifenprofiltiefe des Fahrzeugreifens richtig zu berücksichtigen. Zuvor wurde bereits erläutert, dass die Referenzprofiltiefe des Reifenprofils ebenfalls Einfluss auf die Bestimmung der Reifenprofiltiefe des Fahrzeugreifens hat.

Es ist deshalb vorgesehen, dass die erste Prozessoreinheit des Systems oder die zweite Prozessoreinheit des Systems dazu konfiguriert ist, die Reifenprofiltiefe des Reifenprofils des Laufstreifens des Fahrzeugreifens basierend auf der Referenzprofiltiefe, dem erste Parameter und dem zweiten Parameter zu bestimmen. Dies erlaubt eine besonders präzise Bestimmung der Reifenprofiltiefe.

Gemäß einer vorteilhaften Ausgestaltung kann es vorgesehen sein, dass das System nur die erste Prozessoreinheit aufweist. In diesem Fall ist es bevorzugt vorgesehen, dass die erste Prozessoreinheit zur Bestimmung der Reifenprofiltiefe konfiguriert ist. Dadurch kann ein besonders kompaktes System gewährleistet werden.

Gemäß einer weiteren, vorteilhaften Ausgestaltung des Systems hat es sich als vorteilhaft herausgestellt, wenn das System die erste Prozessoreinheit und die zweite Prozessoreinheit aufweist. In diesem Fall ist die erste Prozessoreinheit nicht zur Bestimmung der Reifenprofiltiefe konfiguriert. Vielmehr ist es bevorzugt vorgesehen, dass in diesem Fall die zweite Prozessoreinheit zur Bestimmung der Reifenprofiltiefe basierend auf der Referenzprofiltiefe, dem ersten Parameter und dem zweiten Parameter konfiguriert ist. Die erste Prozessoreinheit und die zweite Prozessoreinheit können dabei körperlich getrennt voneinander ausgebildet sein. Die Signalempfangsschnittstelle ist vorzugsweise der ersten Prozessoreinheit zugeordnet und/oder körperlich mit dieser verbunden. So kann die erste Signalempfangsschnittstelle über eine Signalleitung mit der ersten Prozessoreinheit gekoppelt sein. Darüber hinaus ist es möglich, dass die erste Prozessoreinheit über eine Signalverbindung mit der zweiten Prozessoreinheit gekoppelt ist. Diese Signalverbindung kann eine Leitungs-Signalverbindung, eine Funk-Signalverbindung oder eine Kombination daraus sein. Die erste Prozessoreinheit ist konfiguriert, um die Umlaufzeit, den ersten Parameter und den zweiten Parameter zu ermitteln. Dies muss jedoch nicht zwingend innerhalb einer Umlaufzeit erfolgen. Vielmehr sich die jeweils zu berücksichtigenden Beschleunigungsgradienten auf einen zugehörigen Wert, der während des Umlauf des Reifens und somit während der zugehörigen Umlaufzeit aufgetreten ist. Außerdem kann die erste Prozessoreinheit ausgebildet sein, um ein Transfersignal an die zweite Prozessoreinheit zu übertragen, wobei das Transfersignal die Umlaufzeit, den ersten Parameter und den zweiten Parameter repräsentiert. Dies ist insbesondere dann von Vorteil, wenn die zweite Prozessoreinheit körperlich von der ersten Prozessoreinheit getrennt ist. So kann die erste Prozessoreinheit zusammen mit der Signalempfangsschnittstelle und der Speichereinheit beispielsweise als eine Vorrichtung an dem Fahrzeugreifen, insbesondere an der Reifeninnenseite des Fahrzeugreifens, befestigt sein. Die zweite Prozessoreinheit kann beispielsweise direkt oder indirekt an einem Fahrzeugaufbau eines Kraftfahrzeugs angeordnet sein. Da das Transfersignal nur die Umlaufzeit, den ersten Parameter und den zweiten Parameter repräsentiert, ist durch das Transfersignal nur ein geringer Datenstrom von der ersten Prozessoreinheit an die zweite Prozessoreinheit zu gewährleisten. Somit kann beispielsweise digitales Funksignal für das Transfersignal verwendet werden, das besonders störgrößenrobust ist und dabei beispielsweise nur eine geringe Datenübertragungsrate bieten braucht. Darüber hinaus kann die zweite Prozessoreinheit eine besonders leistungsfähige Datenverarbeitungseinheit aufweisen, mittels der die Ermittlung der Reifenprofiltiefe basierend auf der Referenzprofiltiefe, dem ersten Parameter und dem zweiten Parameter erfolgen kann.

Eine vorteilhafte Ausgestaltung des Systems zeichnet sich dadurch aus, dass ein dreidimensionales Kennfeld von der Speichereinheit oder einer optionalen, weiteren Speichereinheit gespeichert ist, wobei das Kennfeld mögliche Reifenprofiltiefen in Abhängigkeit von möglichen Referenzprofiltiefen, möglichen Größen für den ersten Parameter und möglichen Größen für den zweiten Parameter repräsentiert. Die zum Bestimmen der Reifenprofiltiefe vorgesehene Prozessoreinheit, also entweder die erste Prozessoreinheit oder die zweite Prozessoreinheit, ist dazu konfiguriert, die Reifenprofiltiefe des Reifenprofils des Laufstreifens des Fahrzeugreifens mittels des Kennfelds und basierend auf der gespeicherten Referenzprofiltiefe, dem ermittelten, ersten Parameter und dem ermittelten, zweiten Parameter zu bestimmen. Die gespeicherte Referenzprofiltiefe, der ermittelte, erste Parameter und der ermittelte, zweite Parameter können also dazu verwendet werden, um die entsprechende Größe in dem Kennfeld aufzufinden und den für diese Größen in dem Kennfeld hinterlegte Größe für die Reifenprofiltiefe als die Reifenprofiltiefe des Reifenprofils des Laufstreifens des Fahrzeugreifens zu bestimmen. Hierzu können die erste Prozessoreinheit oder die zweite Prozessoreinheit konfiguriert und/oder ausgebildet sein. Sofern die erste Prozessoreinheit zur Bestimmung der tatsächlichen Reifenprofiltiefe verwendet wird, kann das Kennfeld von der Speichereinheit gespeichert sein, das auch die Referenzprofiltiefe speichert. Wird hingegen die zweite Prozessoreinheit zur Bestimmung der Reifenprofiltiefe verwendet, so kann das Kennfeld von der weiteren Speichereinheit gespeichert sein. Diese weitere Speichereinheit kann der zweiten Prozessoreinheit zugeordnet sein. Das Kennfeld kann durch praktische Untersuchungen und/oder durch Simulationen vorbestimmt sein. Werden dann entsprechende Messungen und Auswertungen ausgeführt, um den ersten und zweiten Parameter zu bestimmen, dient das Kennfeld als Hilfsmittel zur präzisen Bestimmung der tatsächlichen Reifenprofiltiefe. Damit ist die Bestimmung der Reifenprofiltiefe besonders präzise. Vorzugsweise ist das Kennfeld derart ausgestaltet, dass das Kennfeld jeweils einen Wert für die Profiltiefe jeder möglichen und/oder praktisch relevanten Kombination von Werten der Referenzprofiltiefe, des ersten Parameters und des zweiten Parameters eindeutig zuordnet. Das Kennfeld kann somit beispielsweise eine dreidimensionale Funktion repräsentieren, die Werte von dem ersten und zweiten Parameter gleichzeitig berücksichtigt. Dies kann beispielsweise durch die Berücksichtigung eines Quotienten des ersten und zweiten Parameters, oder umgekehrt, sein. So kann das Kennfeld beispielsweise die folgende Funktion zumindest indirekt abbilden:

$$Profiltiefe = f(a, b, Referenzprofiltiefe) = f(a^{m1}, Referenzprofiltiefe) + f(b^{n1},$$

$$Referenzprofiltiefe) + f(a^{m2}*b^{n2}, Referenzprofiltiefe)$$

Eine weitere vorteilhafte Ausgestaltung des Systems zeichnet sich dadurch aus, dass das Verhältnis zwischen dem Zeitabstand und der Umlaufzeit auf einen Betrag der Zeitdifferenz zwischen dem Zeitabstand und der Umlaufzeit bezieht und/oder dadurch bestimmt ist. Dadurch kann zumindest indirekt auf den Zeitabstand bzw. auf den Anteil des Zeitabstands an der Umlaufzeit geschlossen werden. Die entsprechenden Informationen können durch das Verhältnis repräsentiert sein. Dies ist hilfreich, um die Wechselbeziehung zwischen dem ersten Parameter und dem zweiten Parameter zur genauen Bestimmung der Reifenprofiltiefe zu berücksichtigen.

Eine weitere vorteilhafte Ausgestaltung des Systems zeichnet sich dadurch aus, dass sich das Verhältnis zwischen dem Zeitabstand und der Umlaufzeit auf einen Betrag eines Quotienten von dem Zeitabstand zu der Umlaufzeit, oder umgekehrt, bezieht und/oder dadurch bestimmt ist. Auch aus diesem Verhältnis lässt sich auf die Wechselbeziehung zwischen dem ersten und zweiten Parameter besonders effektiv schließen, so dass eine besonders genaue Bestimmung der Reifenprofiltiefe ermöglicht ist.

Eine weitere vorteilhafte Ausgestaltung des Systems zeichnet sich dadurch aus, dass das System eine Signalsendeschnittstelle aufweist, die zum Aussenden eines Sendesignals ausgebildet ist, das die bestimmte Referenzprofiltiefe des Reifenprofils des Laufstreifens des Fahrzeugreifens repräsentiert. Mittels der Signalendschnittstelle kann das Sendesignal also beispielsweise an eine weitere Vorrichtung, beispielsweise an eine Steuereinheit eines Fahrzeugs, gesendet werden. Dadurch kann der Steuereinheit die Information bereitgestellt werden, wie groß die Reifenprofiltiefe beispielsweise eines am Fahrzeug befestigten Reifens ist. Die Steuereinheit kann ausgebildet sein, um weitere Auswertungen und/oder Warnungen an einen Fahrer zu übermitteln, was auf einen Zustand des Fahrzeugreifens in Abhängigkeit der Reifenprofiltiefe schließen lässt.

Gemäß einem zweiten Aspekt der Erfindung wird die eingangs genannte Aufgabe gelöst durch ein Fahrzeug mit den Merkmalen des Anspruchs 5 . Vorgesehen ist also ein Fahrzeug, das ein System, mehrere Fahrzeugräder mit jeweils einem Fahrzeugreifen, und einen Beschleunigungssensor aufweist. Bei dem System handelt es sich vorzugsweise um das System gemäß dem ersten Aspekt der Erfindung und/oder einer der zugehörigen, vorteilhaften Ausgestaltungen. Der Beschleunigungssensor des Fahrzeugs ist einem der Fahrzeugreifen zugeordnet und an diesem Fahrzeugreifen derart befestigt, um eine auf ein Reifenprofil eines Laufstreifens des Fahrzeugreifens wirkende Beschleunigung in Radialrichtung des Fahrzeugreifens zumindest indirekt zu erfassen. Der Beschleunigungssensor ist zur Erzeugung eines Messsignals ausgebildet, das die erfasste Beschleunigung repräsentiert. Der Beschleunigungssensor und die Signalempfangsschnittstelle des Systems sind derart gekoppelt, um das Messsignal von dem Beschleunigungssensor an die Signalempfangsschnittstelle des Systems zu übertragen. Das System ist ausgebildet, die von der jeweiligen Prozessoreinheit bestimmte Reifenprofiltiefe über ein Sendesignal an eine Steuereinheit des Fahrzeugs zu übertragen. Bezüglich des Systems des Fahrzeugs wird auf die vorteilhaften Ausgestaltungen, bevorzugten Merkmale, Effekte und/oder Vorteile, wie sie im Zusammenhang mit dem System gemäß dem ersten Aspekt der Erfindung und/oder einer der zugehörigen, vorteilhaften Ausgestaltungen erläutert worden sind, in analoger Weise bevorzugt Bezug genommen. Das System ist also dazu ausgebildet, um die Profiltiefe des Fahrzeugreifens zu bestimmen. Hierzu kann insbesondere die erste oder zweite Prozessoreinheit entsprechend konfiguriert sein. Das Messsignal kann über eine Signalverbindung zwischen dem Beschleunigungssensor und der Signalempfangsschnittstelle des Systems übertragen werden. Die Signalverbindung kann als eine Funk-Signalverbindung oder als eine leitungsgebundene Signalverbindung ausgebildet sein. Außerdem ist das System des Fahrzeugs ausgebildet, das Sendesignal an die Steuereinheit des Fahrzeugs zu übertragen. Somit kann der Steuereinheit die Information über die Profiltiefe des Fahrzeugreifens vorliegen. Die Steuereinheit kann dazu ausgebildet und/oder konfiguriert sein, basierend auf dem Sendesignal bzw. der von dem Sendesignal repräsentierten Profiltiefe weitere Funktionen auszuführen und/oder ein optisches und/oder akustisches Signal im Fahrzeuginnenraum auszugeben. Dadurch kann ein Fahrer des Fahrzeugs die Information über die Profiltiefe des Reifens erhalten.

Eine vorteilhafte Ausgestaltung des Fahrzeugs zeichnet sich dadurch aus, dass der Beschleunigungssensor und die Signalempfangsschnittstelle des Systems telemetrisch gekoppelt sind oder über eine Signalleitung gekoppelt sind. Sofern der Beschleunigungssensor und die Signalempfangsschnittstelle des Systems telemetrisch gekoppelt sind, kann das Messsignal per Funk von dem Beschleunigungssensor an die Signalempfangsschnittstelle übertragen werden. Der Beschleunigungssensor kann dazu eine Funkschnittstelle aufweisen, um das Messsignal per Funk an die Signalempfangsschnittstelle zu senden. Diese kann ebenfalls zum Empfang des Messsignals über Funk ausgebildet sein. Es ist jedoch auch möglich, dass der Beschleunigungssensor und die Signalempfangsschnittstelle des Systems über die Signalleitung gekoppelt sind, über die das Messsignal übertragen werden kann.

Eine weitere vorteilhafte Ausgestaltung des Fahrzeugs zeichnet sich dadurch aus, dass das System einer Karosserie des Fahrzeugs zugeordnet ist und/oder daran angeordnet ist. Das System ist also insbesondere nicht in dem Fahrzeugreifen oder an dem Fahrzeugreifen befestigt. Dies bietet den Vorteil, dass ein Gewicht des Systems nicht dem Fahrzeugreifen zugeordnet ist. Außerdem bietet insbesondere der Fahrzeugaufbau mehr Platz, um das System aufzunehmen. Sofern das System der Karosserie zugeordnet ist oder daran angeordnet ist, sind der Beschleunigungssensor und die Signalempfangsschnittstelle des Systems vorzugsweise telemetrisch, also per Funk, gekoppelt.

Eine weitere vorteilhafte Ausgestaltung des Fahrzeugs zeichnet sich dadurch aus, dass das System an dem Fahrzeugreifen angeordnet ist, an dem auch der Beschleunigungssensor befestigt ist, wobei das System die Signalschnittstelle aufweist, die auch zum Aussenden des Sendesignals per Funk an eine mit der Steuereinheit des Fahrzeugs gekoppelten Funkempfangseinheit ausgebildet ist. Das System kann also anstatt in der Karosserie des Fahrzeugs alternativ in dem Fahrzeugreifen angeordnet sein. So kann das System beispielsweise als eine Vorrichtung ausgestaltet sein. In diesem Fall kann die Vorrichtung beispielsweise an einer Reifeninnenseite des Fahrzeugreifens befestigt sein. Das Sendesignal repräsentiert die von dem System bestimmte Reifenprofiltiefe. Somit kann durch Übertragung des Sendesignals die Information über die Reifenprofiltiefe an die Steuereinheit des Fahrzeugs übertragen werden. Hierzu ist die Funkempfangseinheit mit der Steuereinheit gekoppelt. Dabei ist es möglich, dass die Funkempfangseinheit einen Teil der Steuereinheit ausbildet und/oder integral mit dieser ausgestaltet ist.

Eine weitere vorteilhafte Ausgestaltung des Fahrzeugs zeichnet sich dadurch aus, dass die Steuereinheit konfiguriert ist, ein Alarmsignal zu erzeugen, wenn die mittels des Systems bestimmte Reifenprofiltiefe des Fahrzeug-greifens einen vorbestimmten Schwellwert erreicht und/oder unterschreitet. Der Schwellwert kann beispielsweise derart gewählt werden, dass ein sicherer Straßenkontakt zwischen dem Fahrzeugreifen und dem Untergrund gewährleistet ist. Unterschreitet die Reifenprofiltiefe den Schwellwert oder erreicht die Reifenprofiltiefe den Schwellwert, kann von der Steuereinheit das Alarmsignal erzeugt werden. Damit ist es möglich, dass die Steuereinheit und/oder das Fahrzeug den Fahrer auf den entsprechenden Zustand mittels des Alarmsignals aufmerksam macht.

Eine weitere vorteilhafte Ausgestaltung des Fahrzeugs zeichnet sich dadurch aus, dass das Fahrzeug zum Ausgeben eines optischen und/oder akustischen Signals basierend auf dem Alarmsignal ausgebildet ist. So kann beispielsweise das Signal optisch mit einer Anzeigeeinheit im Innenraum des Kraftfahrzeugs ausgegeben werden. Weist das Fahrzeug beispielsweise ein Display auf, so kann das optische Signal mittels des Displays ausgegeben werden. Es ist jedoch auch möglich, dass das Fahrzeug zum akustischen Ausgeben des Signals basierend auf dem Alarmsignal ausgebildet ist. So kann das Fahrzeug beispielsweise einen Lautsprecher und/oder ein anderes akustisches Ausgabemittel aufweisen, das zum Ausgeben des akustischen Signals ausgebildet ist. Dies wird beispielsweise dann aktiviert, wenn zuvor das Alarmsignal erzeugt worden ist. Durch das optische und/oder akustische Signal erhält der Fahrer des Fahrzeugs die Information, dass der Fahrzeugreifen eine Profiltiefe aufweist, die den vorbestimmten Schwellwert erreicht hat oder diesen bereits unterschreitet. Der Fahrer kann daraufhin entsprechende Folgemaßnahmen ergreifen.

Gemäß einem dritten Aspekt der Erfindung wird die eingangs genannte Aufgabe gelöst durch ein Verfahren mit den Merkmalen des Anspruchs 11 . Vorgesehen ist also ein Verfahren zur Bestimmung einer Reifenprofiltiefe es Fahrzeugreifens. Das Verfahren weist die folgenden Schritte auf:

    a) Empfang eines Messsignals eines Beschleunigungssensors des Fahrzeugreifens mittels einer Signalempfangsschnittstelle eines Systems, wobei das Messsignal eine auf ein Reifenprofil eines Laufstreifens des Fahrzeugreifens wirkende, radiale Beschleunigung zumindest indirekt repräsentiert, wobei eine Referenzprofiltiefe des Reifenprofils von einer Speichereinheit des Systems gespeichert ist,
    b) Ermitteln eines Prozesssignals basierend auf dem Messsignal mittels einer ersten Prozessoreinheit des Systems, so dass das Prozesssignal einen Beschleunigungsgradienten der auf das Reifenprofil des Laufstreifens des Fahrzeugreifens wirkenden Beschleunigung zumindest indirekt repräsentiert,

c) Ermitteln einer Umlaufzeit des Fahrzeugreifens basierend auf dem Messsignal und/oder dem Prozesssignal mittels der ersten Prozessoreinheit des Systems,

d) Ermitteln eines ersten Parameters basierend auf dem Prozesssignal mittels der ersten Prozessoreinheit des Systems, so dass der erste Parameter einen maximalen Beschleunigungsgradient während der Umlaufzeit, einen minimalen Beschleunigungsgradient während der Umlaufzeit oder einen Mittelwert aus dem maximalen und minimalen Beschleunigungsgradient während der Umlaufzeit zumindest indirekt repräsentiert,

e) Ermitteln eines zweiten Parameters basierend auf dem Prozesssignal mittels der ersten Prozessoreinheit des Systems, so dass der zweite Parameter entweder einen Zeitabstand zwischen dem maximalen und minimalen Beschleunigungsgradient während der Umlaufzeit oder ein Verhältnis zwischen dem Zeitabstand und der Umlaufzeit zumindest indirekt repräsentiert, und

f) Ermitteln der Reifenprofiltiefe des Reifenprofils des Laufstreifens des Fahrzeugreifens basierend auf der Referenzprofiltiefe, dem ersten Parameter und dem zweiten Parameter mittels der ersten Prozessoreinheit des Systems oder mittels einer optionalen zweiten Prozessoreinheit des Systems.

Die Verfahrensschritte des Verfahrens gemäß dem dritten Aspekt der Erfindung korrespondieren zu dem System gemäß dem ersten Aspekt der Erfindung, insbesondere zumindest teilweise zu der Konfiguration der mindestens einen Prozessoreinheit des Systems. Für das Verfahren wird deshalb auf die vorteilhaften Erläuterungen, bevorzugten Merkmale, Effekte und/oder Vorteile in analoger Weise Bezug genommen, wie sie für das System gemäß dem ersten Aspekt der Erfindung und/oder einer der zugehörigen vorteilhaften Ausgestaltungen des Systems erläutert worden sind.

Eine vorteilhafte Ausgestaltung des Verfahrens zeichnet sich dadurch aus, dass ein dreidimensionales Kennfeld von der Speichereinheit des Systems oder von einer optionalen, weiteren Speichereinheit des Systems gespeichert ist, wobei das Kennfeld mögliche Reifenprofiltiefen in Abhängigkeit von möglichen Referenzprofiltiefen, möglichen Größen für den ersten Parameter und möglichen Größen für den zweiten Parameter repräsentiert, und wobei die Reifenprofiltiefe des Reifenprofils des Laufstreifens des Fahrzeugreifens in Schritt f) mittels des Kennfelds und basierend auf der gespeicherten Referenzprofiltiefe, dem ermittelten, ersten Parameter und dem ermittelten, zweiten Parameter bestimmt wird. Für diese vorteilhafte Ausgestaltung des Verfahrens wird auf die vorteilhaften Erläuterungen, bevorzugten Merkmale, Effekte und Vorteile in analoger Weise Bezug genommen, wie sie für die korrespondierende Ausgestaltung des Systems bereits erläutert worden sind.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.

Figur 1    zeigt eine vorteilhafte Ausgestaltung eines Fahrzeugs in einer schematischen Perspektivansicht.

Figur 2    zeigt eine vorteilhafte Ausgestaltung des Systems in einer schematischen Darstellung.

Figur 3    zeigt eine weitere, vorteilhafte Ausgestaltung des Systems in einer schematischen Darstellung.

Figur 4    zeigt einen Ausschnitt einer vorteilhaften Ausgestaltung eines Fahrzeugreifens in einer schematischen Schnittdarstellung.

Figur 5    zeigt einen beispielhaften Verlauf einer auf einen Laufstreifen eines Fahrzeugreifens wirkenden Radialbeschleunigung.

Figur 6    zeigt den Verlauf des Beschleunigungsgradienten der in Figur 5 gezeigten Beschleunigung.

Figur 7    zeigt eine beispielhafte Ausgestaltung eines Kennfelds in einer schematischen Darstellung.

Figur 8    zeigt eine beispielhafte Ausgestaltung des Verfahrens in einem schematischen Ablaufplan.

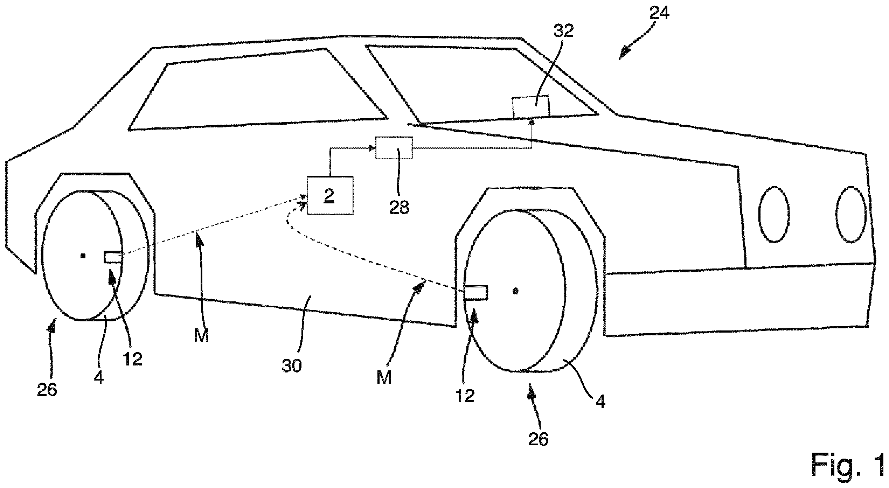

In der Figur 1 ist ein Fahrzeug 24 in einer schematischen Darstellung wiedergegeben. Das Fahrzeug 24 weist ein System 2 auf. Bevor auf das Fahrzeug 24 weiter eingegangen wird, soll bereits an dieser Stelle darauf hingewiesen werden, dass die folgenden Erläuterungen zum System 2 sich zwar bevorzugt auf das System 2 des Fahrzeugs 24 beziehen können, jedoch ist es bevorzugt auch vorgesehen, dass die Erläuterungen zum System 2 auch unabhängig vom Fahrzeug 24 für ein System 2 als solches gelten können.

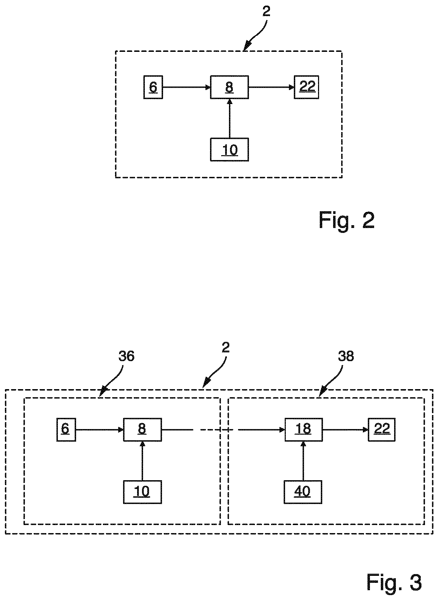

In der Figur 2 ist eine vorteilhafte Ausgestaltung des Systems 2 in einer schematischen Darstellung wiedergegeben. Dieses System 2 kann einen Teil des Fahrzeugs 24 sein. Es ist jedoch auch möglich, dass das System 2 keine körperliche Verbindung zu dem Fahrzeug 24 aufweist. Das System 2 nach Art einer Vorrichtung ausgebildet sein. In diesem Fall kann die Vorrichtung als eine einzeln handhabbare Vorrichtung ausgestaltet sein. Die folgenden Erläuterungen zu dem System 2 können sich somit auf eine vorrichtungshafte Ausgestaltung des Systems 2 und/oder auf ein System 2 des Fahrzeugs 24 beziehen.

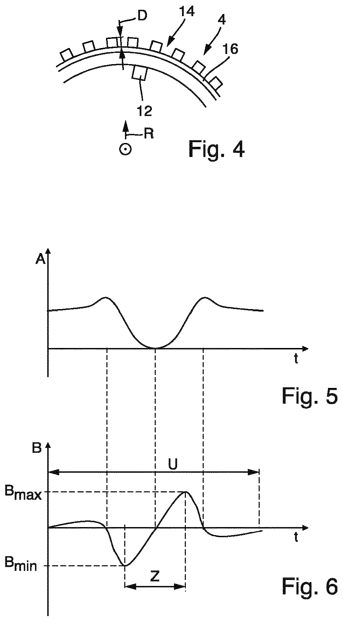

Bei dem System 2 handelt es sich um ein System zur Bestimmung einer Reifenprofiltiefe D eines Fahrzeugreifens 4. In der Figur 4 ist ein Ausschnitt eines Fahrzeugreifens 4 in einer schematischen Schnittdarstellung wiedergegeben. Der Fahrzeugreifen 4 weist einen Laufstreifen 16 auf, der ein Reifenprofil 14 an seiner radial äußeren Mantelfläche aufweist und/oder ausbildet. Das Reifenprofil 14 wird dabei vorzugsweise durch sogenannte Profilblöcke des Laufstreifens 16 gebildet, wobei zwischen den Profilblöcken Vertiefungen vorgesehen sind. Die Reifenprofiltiefe D bezieht sich dabei auf die Tiefe dieser Vertiefungen in Radialrichtung R.

Vorzugsweise ist an einer Reifeninnenseite des Fahrzeugreifens 4 ein Beschleunigungssensor 12 befestigt. Der Beschleunigungssensor 12 ist vorzugsweise zur Erfassung einer auf den Fahrzeugreifen 4, und insbesondere einer auf den Laufstreifen 16, wirkenden Beschleunigung A in Radialrichtung R ausgebildet. Ein Verlauf der gemessenen Beschleunigung A ist beispielhaft in Fig. 6 dargestellt. Der Beschleunigungssensor 12 ist vorzugsweise zur Erfassung der auf den Laufstreifen 16 wirkenden Beschleunigung A und/oder einer auf einen Innenliner des Fahrzeugreifens, der an der Reifeninnenseite des Fahrzeugreifens angeordnet ist, wirkenden radialen Beschleunigung A ausgebildet sein. Der Beschleunigungssensor 12 ist zur Erzeugung eines Messsignals ausgebildet, dass die auf das Reifenprofil 14 des Laufstreifens 16 des Fahrzeugreifens 4 und/oder auf den Innenliner wirkenden radialen Beschleunigung A repräsentiert.

Rollt der Fahrzeugreifen 4 auf einem Untergrund ab, entsteht ein periodischer Umlauf des Fahrzeugreifens 4. In der Figur 5 ist ein beispielhafter Verlauf der von dem Beschleunigungssensor 12 erfassten Beschleunigung A während eines Umlaufs des Fahrzeugreifens 4 beispielhaft und schematisch dargestellt. Sofern der dem Beschleunigungssensor 12 gegenüberliegende Teil des Laufstreifens 16 keinen unmittelbaren Kontakt zum Untergrund aufweist, ist die vom Beschleunigungssensor 12 erfasste Beschleunigung A zunächst zumindest im Wesentlichen konstant. Kommt der genannte Teil des Laufstreifens 16 in Kontakt mit dem Untergrund, so erhöht sich zunächst die Beschleunigung A um sodann kontinuierlich zu sinken. An dem tiefsten Punkt der Beschleunigung A ist der Beschleunigungssensor 12 zumindest im Wesentlichen gegenüberliegend zu dem Untergrund. Dies ist beispielsweise dann der Fall, wenn der Beschleunigungssensor 12 mittig im Latschbereich des Fahrzeugreifens 4 ist. Daraufhin steigt die Beschleunigung A wieder an und nimmt den Verlauf an, bis der Umlauf des Fahrzeugreifens 4 beendet ist.

In der Figur 6 ist der Beschleunigungsgradient B der in Figur 5 gezeigten Beschleunigung A wiedergegeben. Der Beschleunigungsgradient B ist der zeitliche Gradient des Verlaufs der in Figur 5 gezeigten Beschleunigung A. In der Figur 6 ist auch die Umlaufzeit U markiert, die während eines vollständigen Umlaufs des Fahrzeugreifens 2 vergangen ist. Außerdem ist aus dem Verlauf des Beschleunigungsgradienten B der maximale Beschleunigungsgradient $B_{max}$ und der minimale Beschleunigungsgradient $B_{min}$ zu entnehmen. Zwischen dem Auftreten des minimalen Beschleunigungsgradienten $B_{min}$ und des maximalen Beschleunigungsgradienten $B_{max}$ vergeht ein Zeitabstand Z.

Es wurde festgestellt, dass zur Bestimmung der Profiltiefe D des Fahrzeugreifens 4 sowohl der Beschleunigungsgradient B als auch der Zeitabstand Z hilfreich sind. Der Beschleunigungsgradient B kann aus der zeitlichen Ableitung der Beschleunigung A, wie sie beispielhaft in Figur 5 dargestellt ist, ermittelt werden. Das System 2 weist deshalb eine Signalempfangsschnittstelle 6 auf, die zum Empfang eines Messsignals des Beschleunigungssensors 12 ausgebildet ist. Ein entsprechendes Messsignal M ist beispielhaft in der Figur 1 dargestellt, das per Funk von dem Beschleunigungssensor 12 an die Signalempfangsschnittstelle 6 des Systems 2 übertragen werden kann. Das Messsignal M repräsentiert einen auf den Laufstreifen 16, und somit auch auf das zugehörige Reifenprofil 14, oder auf den Innenliner des Fahrzeugreifens 4 wirkenden Beschleunigung A in Radialrichtung R. Damit erhält das System 2 die Information über die auf den Fahrzeugreifen 4 wirkenden Beschleunigung A.

Außerdem weist das System 2 eine erste Prozessoreinheit 8 auf. Wie aus der Figur 2 exemplarisch zu entnehmen ist, ist die Signalempfangsschnittstelle 6 mit der ersten Prozessoreinheit 8 derart gekoppelt, um das von der Signalempfangsschnittstelle 6 empfangene Messsignal M bzw. die von dem Messsignal M repräsentierte Beschleunigung A an die erste Prozessoreinheit 8 zu übermitteln. Die erste Prozessoreinheit 8 ist konfiguriert, basierend auf dem Messsignal M bzw. auf der von dem Messsignal M repräsentierten Beschleunigung A ein Prozesssignal zu ermitteln, das den Beschleunigungsgradienten B der auf das Reifenprofil 14 des Laufstreifens 16 des Fahrzeugreifens 4 oder der auf den Innenliner des Fahrzeugreifens 4 wirkenden Beschleunigung A in Radialrichtung R zumindest indirekt repräsentiert. Ein beispielhafter Verlauf des Beschleunigungsgradienten B ist in Figur 6 schematisch dargestellt. Um den Beschleunigungsgradienten A zu bestimmen, kann die erste Prozessoreinheit 8 ausgebildet und/oder konfiguriert sein, die zeitliche Ableitung der mittels des Messsignals M empfangenen Beschleunigung A zu bestimmen. Das Prozesssignal kann somit den Verlauf des Beschleunigungsgradienten B repräsentieren, der beispielhaft in Figur 6 gezeigt ist.

Außerdem ist die erste Prozessoreinheit 8 dazu konfiguriert, eine Umlaufzeit U des Fahrzeugreifens 4 basierend auf dem Messsignal M und/oder dem Prozesssignal zu ermitteln. In der Figur 5 ist der Verlauf der Beschleunigung A während eines Umlaufs des Fahrzeugreifens 4 dargestellt. Entsprechend ist in Figur 6 der Beschleunigungsgradient B für einen Umlauf des Fahrzeugreifens 4 dargestellt. Aus beiden Signalverläufen ist der periodische Verlauf zu erkennen. Deshalb ist es auch möglich, daraus die entsprechende Zeit für den Umlauf, nämlich die Umlaufzeit U, zu ermitteln. Hierzu ist die erste Prozesseinheit 8 konfiguriert.

Außerdem ist es bevorzugt vorgesehen, dass die erste Prozesseinheit 8 konfiguriert ist, den minimalen Beschleunigungsgradienten $B_{min}$ und/oder den maximalen Beschleunigungsgradienten $B_{max}$ zu ermitteln. Die Zeit, die zwischen dem Auftreten des minimalen Beschleunigungsgradienten $B_{min}$ und dem maximalen Beschleunigungsgradienten $B_{max}$ vergeht, wird als Zeitabstand Z bezeichnet. Die erste Prozessoreinheit 8 ist bevorzugt dazu konfiguriert, den Zeitabstand zwischen dem maximalen und minimalen Beschleunigungsgradienten $B_{max}$, $B_{min}$ zu ermitteln. Der Zeitabstand Z ermittelt sich dabei vorzugsweise vorausgehend von dem Maximalwert, der zuerst auftritt. Tritt also, wie beispielsweise in Figur 6 dargestellt, zunächst der minimale Beschleunigungsgradient auf, beschreibt der Zeitabstand Z den zeitlichen Abstand zwischen dem Auftreten des minimalen Beschleunigungsgradienten $B_{min}$ und des maximalen Beschleunigungsgradienten $B_{max}$. Tritt hingegen bei einem Umlauf zunächst der maximale Beschleunigungsgradient $B_{max}$ und daraufhin der minimale Beschleunigungsgradient $B_{min}$ auf, so kann sich der Zeitabstand Z auf den zeitlichen Abstand zwischen dem Auftreten des maximalen Beschleunigungsgradienten $B_{max}$ und dem Auftreten des minimalen Beschleunigungsgradienten $B_{min}$ beziehen.

Die erste Prozessoreinheit 8 ist außerdem dazu konfiguriert, basierend auf dem Prozesssignal einen ersten Parameter $P_1$ zu ermitteln, der einen maximalen Beschleunigungsgradienten $B_{max}$ während der Umlaufzeit U, einen minimalen Beschleunigungsgradienten $B_{min}$ während der Umlaufzeit U oder einen Mittelwert aus den maximalen Beschleunigungsgradienten $B_{max}$ und insbesondere dem Betrag des minimalen Beschleunigungsgradienten $B_{min}$ während der Umlaufzeit U zumindest indirekt repräsentiert. Darüber hinaus ist die erste Prozessoreinheit 8 dazu konfiguriert, basierend auf dem Prozesssignal einen zweiten Parameter $P_2$ zu ermitteln, der entweder den Zeitabstand Z zwischen dem maximalen und minimalen Beschleunigungsgradienten $B_{max}$, $B_{min}$, oder umgekehrt, während der Umlaufzeit U oder ein Verhältnis zwischen dem Zeitabstand Z und der Umlaufzeit U zumindest indirekt repräsentiert.

Mit den ersten und zweiten Parametern $P_1$, $P_2$ werden also Werte von der ersten Prozessoreinheit 8 ermittelt, die - wie eingangs erläutert - besonders vorteilhaft sind, um eine besonders präzise Bestimmung der Profiltiefe D zu erlauben. Die Profiltiefe D hängt jedoch außerdem von der Tiefe des Profils 14 ab, die es beim Ausgangszustand des Fahrzeugreifens 4 hatte.

Das System 2 weist deshalb außerdem eine Speichereinheit 10 auf, von der eine Referenzprofiltiefe E des Reifenprofils 14 gespeichert ist. Die Referenzprofiltiefe E gibt dabei die Profiltiefe des Reifenprofils 14 an, die als Ausgangsgröße für die Tiefe des Profils 14 des Fahrzeugreifens 4 zu berücksichtigen ist. Die Referenzprofiltiefe E kann beispielsweise die Tiefe angeben, die das Reifenprofil 14 bei dem Ausgangszustand nach der Neuherstellung des Fahrzeugreifens 4 hat. Es ist aber auch möglich, dass die Referenzprofiltiefe E durch eine am Fahrzeugreifen 4 gemessene Tiefe des Reifenprofils 14 bestimmt ist. Dies ist insbesondere dann von Vorteil, wenn ein Fahrzeugreifen 4 nach einer Reparatur erneut an einem Fahrzeug verwendet wird.

Eine weitere vorteilhafte Ausgestaltung des Systems 2 zeichnet sich dadurch aus, dass die erste Prozessoreinheit 8 dazu konfiguriert ist, die Profiltiefe D des Reifenprofils 14 des Laufstreifens 16 des Fahrzeugreifens 4 basierend auf der Referenzprofiltiefe D, dem ersten Parameter $P_1$ und dem zweiten Parameter $P_2$ zu bestimmen. Es ist aber auch möglich, dass das System 2 eine weitere, zweite Prozessoreinheit 18 aufweisen kann, die zur Bestimmung der Reifenprofiltiefe D konfiguriert sein kann.

In der Figur 3 ist eine weitere, vorteilhafte Ausgestaltung des Systems 2 schematisch dargestellt. Dabei umfasst das System 2 ein erstes Teilsystem 36 und ein zweites Teilsystem 38. Das erste Teilsystem 36 umfasst dabei die Signalempfangsschnittstelle 6, die erste Prozessoreinheit 8 und die Speichereinheit 10. Das zweite Teilsystem 38 umfasst zumindest die zweite Prozessoreinheit 18. Dabei ist das System 2 vorzugsweise dazu ausgebildet, dass die erste Prozessoreinheit 8 ein Transfersignal zu der zweiten Prozessoreinheit 18 übertragen kann. Das Transfersignal repräsentiert dabei die Referenzprofiltiefe D, den ersten Parameter $P_1$ und den zweiten Parameter $P_2$. Das in Figur 3 schematisch dargestellte System 2 kann durch die beiden zugehörigen Teilsysteme 36, 38 körperlich verteilt angeordnet und/oder ausgebildet sein. So kann beispielsweise das erste Teilsystem 36 an dem Fahrzeugreifen 4, beispielsweise an einer Reifeninnenseite des Fahrzeugreifens 4, befestigt sein. Das zweite Teilsystem 38 des Systems 2 kann beispielsweise einer Karosserie 30 des Fahrzeugs 24 zugeordnet und/oder daran befestigt sein. Das Transfersignal kann dann als ein Funksignal ausgebildet sein. Es ist aber auch möglich, dass eine Signalleitung zwischen der ersten Prozessoreinheit 8 und der zweiten Prozessoreinheit 18 ausgebildet ist, die zum Übertragen des Transfersignals ausgebildet ist. Die zweite Prozessoreinheit 18 ist derart konfiguriert, die Reifenprofiltiefe D des Reifenprofils 14 des Laufstreifens 16 des Fahrzeugreifens 4 basierend auf der Referenzprofiltiefe D, dem ersten Parameter $P_1$ und dem zweiten Parameter $P_2$ zu bestimmen.

Wenn im Folgenden die Bestimmung der Referenzprofiltiefe D erläutert wird, so soll dies in entsprechender Weise sowohl mittels der ersten Prozessoreinheit 8 als auch mit der zweiten Prozessoreinheit 18 möglich und/oder gelten sein. Die Erläuterungen können sich deshalb auf die Konfiguration jeder der beiden Prozessoreinheiten 8, 18 oder auf zumindest einer der beiden Prozessoreinheiten 8, 18 beziehen.

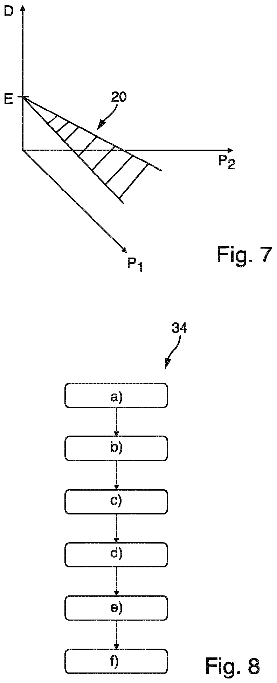

Sofern die erste Prozessoreinheit 8 zur Bestimmung der Reifenprofiltiefe D verwendet wird, ist es bevorzugt vorgesehen, dass ein dreidimensionales Kennfeld von der Speichereinheit 10 gespeichert ist. Ein Beispiel eines derartigen Kennfelds 20 ist in der Figur 7 rein beispielhaft und schematisch dargestellt.

Wird hingegen die zweite Prozessoreinheit 18 zur Bestimmung der Reifenprofiltiefe D verwendet, so ist es bevorzugt vorgesehen, dass das dreidimensionale Kennfeld 20 von einer weiteren Speichereinheit 40 gespeichert ist. Die Speichereinheit 40 kann von dem zweiten Teilsystem 38 umfasst sein.

Das Kennfeld 20, das von der ersten Speichereinheit 10 und/oder der zweiten Speichereinheit 40 gespeichert ist, ist derart ausgestaltet, dass das Kennfeld 20 mögliche Reifenprofiltiefen D in Abhängigkeit von Referenzprofiltiefen E, möglichen Größen für den ersten Parameter $P_1$ und möglichen Größen für den zweiten Parameter $P_2$ repräsentiert. Außerdem ist die jeweils zum Bestimmen der Reifenprofiltiefe D vorgesehene Prozessoreinheit, also entweder die erste Prozessoreinheit 8 oder die zweite Prozessoreinheit 18, dazu konfiguriert, die tatsächliche Reifenprofiltiefe D des Reifenprofils 14 des Laufstreifens 16 des Fahrzeugreifens 4 mittels des Kennfelds 20 und basierend auf der gespeicherten Referenzprofiltiefe E, dem ermittelten, ersten Parameter $P_1$ und dem ermittelten, zweiten Parameter $P_2$ zu bestimmen. Die entsprechende Prozessoreinheit 8, 18 kann also durch die Verwendung der gespeicherten Referenzprofiltiefe D, dem ermittelten, ersten Parameter $P_1$ und dem ermittelten, zweiten Parameter $P_2$ einen entsprechenden Wertesatz aus dem Kennfeld 20 herauslesen und die entsprechend dazu abgespeicherte Referenzprofiltiefe D als die zu ermittelnde, tatsächliche Referenzprofiltiefe D des Reifenprofils 14 bestimmen.

Außerdem hat es sich als vorteilhaft herausgestellt, wenn das System 2 eine Signalsendeschnittstelle 22 aufweist. Diese ist in Figur 2 beispielhaft dargestellt. Die Signalsendeschnittstelle 22 kann dabei mit der ersten Prozessoreinheit 8 gekoppelt sein, so dass die Signalsendeschnittstelle 22 zum Aussenden eines Sendesignals ausgebildet ist, das die von der ersten Prozessoreinheit 8 bestimmte Reifenprofiltiefe D repräsentiert. Es ist aber auch möglich, dass die Signalsendeschnittstelle 22 beispielsweise von dem zweiten Systemteil 38 umfasst ist, wie es beispielhaft in der Figur 3 dargestellt ist. In diesem Fall kann die Signalsendeschnittstelle 22 mit der zweiten Prozessoreinheit 18 derart gekoppelt sein, so dass die Signalsendeschnittstelle 22 zum Aussenden des Sendesignals ausgebildet ist, das die von der zweiten Prozessoreinheit 18 bestimmte Reifenprofiltiefe D repräsentiert.

Außerdem hat es sich als vorteilhaft herausgestellt, wenn ein Fahrzeug 24, wie es beispielhaft in der Figur 1 schematisch dargestellt ist, ein System 2 aufweist, wie es zuvor im Zusammenhang mit den Figuren 1 bis 7 erläutert worden ist. Das Fahrzeug 24 weist mehrere Fahrzeugräder 26 mit jeweils einem Fahrzeugreifen 4 auf. Außerdem weist das Fahrzeug 24 einen Beschleunigungssensor 12 auf, der einem der Fahrzeugreifen 4 zugeordnet und an diesem Fahrzeugreifen 4 derart befestigt ist, um eine auf das Reifenprofil 14 des zugehörigen Laufstreifens 16 des Fahrzeugreifens 4 wirkende Beschleunigung A in Radialrichtung R des Fahrzeugreifens 4 zumindest indirekt zu erfassen. Der Beschleunigungssensor 12 ist zur Erzeugung des Messsignals M ausgebildet, dass die erfasste Beschleunigung A repräsentiert. Der Beschleunigungssensor 12 und die Signalempfangsschnittstelle 6 des Systems 2 sind derart mittels einer Signalverbindung gekoppelt, um das Messsignal von dem Beschleunigungssensor 12 an die Signalempfangsschnittstelle 6 des Systems 2 zu übertragen. Außerdem ist das System 2 derart ausgebildet, die von der jeweiligen Prozessoreinheit 8, 18 bestimmte Reifenprofiltiefe D über ein Sendesignal an eine Steuereinheit 28 des Fahrzeugs 24 zu übertragen. Somit liegt der Steuereinheit 28 die Information über die Profiltiefe D des jeweiligen Reifens 4 vor.

Es hat sich deshalb als vorteilhaft herausgestellt, wenn die Steuereinheit 28 dazu konfiguriert ist, ein Alarmsignal zu erzeugen, wenn die mittels des Systems 2 bestimmte Reifenprofiltiefe D einen vorbestimmten Schwellwert erreicht und unterschreitet. Denn das Fahrzeug 24 kann außerdem zum Ausgeben eines optischen und/oder akustischen Signals basierend auf dem Alarmsignal ausgebildet sein. So kann das Fahrzeug 24 beispielsweise ein Display 32 aufweisen. Die Steuereinheit 28 kann über eine weitere Signalleitung mit dem Display 32 direkt oder indirekt gekoppelt sein. Außerdem kann die Steuereinheit 28 das Display 32 derart steuern, so dass von dem Display das zuvor erläuterte Signal optisch ausgegeben wird, das das Alarmsignal repräsentiert.

In der Figur 8 ist ein Ablaufplan des erfindungsgemäßen Verfahrens 34 zur Bestimmung der Reifenprofiltiefe D des Fahrzeugreifens 4 dargestellt. Das Verfahren 34 erfolgt in analoger Weise zu den zuvor erläuterten Ausgestaltungen, bevorzugten Merkmalen, Effekten und/oder Vorteilen, wie sie im Zusammenhang mit dem System 2 und/oder dem Fahrzeug 24 erläutert worden sind. Auf die entsprechenden Erläuterungen, vorteilhaften Merkmale, Effekte und/oder Vorteile wird deshalb für das Verfahren 34 in analoger Weise Bezug genommen. Das Verfahren 34 verweist zumindest die Schritte a) bis f) auf:

a) Empfang eines Messsignals M eines Beschleunigungssensors 12 des Fahrzeugreifens 4 mittels einer Signalempfangsschnittstelle 6 eines Systems 2, wobei das Messsignal M eine auf ein Reifenprofil 14 eines Laufstreifens 16 des Fahrzeugreifens 4 wirkende, radiale Beschleunigung A zumindest indirekt repräsentiert, wobei eine Referenzprofiltiefe E des Reifenprofils 14 von einer Speichereinheit 10 des Systems 2 gespeichert ist;

b) Ermitteln eines Prozesssignals basierend auf dem Messsignal M mittels einer ersten Prozessoreinheit 8 des Systems 2, so dass das Prozesssignal einen Beschleunigungsgradienten B der auf das Reifenprofil 14 des Laufstreifens 16 des Fahrzeugreifens 4 wirkenden Beschleunigung A zumindest indirekt repräsentiert;

c) Ermitteln einer Umlaufzeit U des Fahrzeugreifens 4 basierend auf dem Messsignal M und/oder dem Prozesssignal mittels der ersten Prozessoreinheit 8 des Systems 2;

d) Ermitteln eines ersten Parameters $P_1$ basierend auf dem Prozesssignal mittels der ersten Prozessoreinheit 8 des Systems 2, so dass der erste Parameter $P_1$ einen maximalen Beschleunigungsgradient $B_{max}$ während der Umlaufzeit U, einen minimalen Beschleunigungsgradient $B_{min}$ während der Umlaufzeit U oder einen Mittelwert aus dem maximalen und minimalen Beschleunigungsgradient $B_{max}$, $B_{min}$ während der Umlaufzeit U zumindest indirekt repräsentiert;

e) Ermitteln eines zweiten Parameters $P_2$ basierend auf dem Prozesssignal mittels der ersten Prozessoreinheit 8 des Systems 2, so dass der zweite Parameter $P_2$ entweder einen Zeitabstand Z zwischen dem maximalen und minimalen Beschleunigungsgradient $B_{max}$, $B_{min}$ während der Umlaufzeit U oder ein Verhältnis zwischen dem Zeitabstand Z und der Umlaufzeit U zumindest indirekt repräsentiert; und

f) Ermitteln der Reifenprofiltiefe D des Reifenprofils 14 des Laufstreifens 16 des Fahrzeugreifens 4 basierend auf der Referenzprofiltiefe E, dem ersten Parameter $P_1$ und dem zweiten Parameter $P_2$ mittels der ersten Prozessoreinheit 8 des Systems 2 oder mittels einer optionalen, zweiten Prozessoreinheit 18 des Systems 2.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Bezugszeichenliste

| | |
|---|---|
| A | Beschleunigung |
| B | Beschleunigungsgradient |
| Bmax | maximaler Beschleunigungsgradient |
| Bmin | minimaler Beschleunigungsgradient |
| D | Reifenprofiltiefe |
| E | Referenzprofiltiefe |
| M | Messsignal |
| P1 | erste Parameter |
| P2 | zweiter Parameter |
| R | Radialrichtung |
| t | Zeit |
| U | Umlaufzeit |
| Z | Zeitabstand |

| | |
|---|---|
| 2 | System |
| 4 | Fahrzeugreifen |
| 6 | Signalempfangsschnittstelle |
| 8 | erste Prozessoreinheit |
| 10 | Speichereinheit |
| 12 | Beschleunigungssensor |
| 14 | Reifenprofil |
| 16 | Laufstreifen |
| 18 | zweite Prozessoreinheit |
| 20 | Kennfeld |
| 22 | Signalsendeschnittstelle |
| 24 | Fahrzeug |
| 26 | Fahrzeugrad |
| 28 | Steuereinheit |
| 30 | Karosserie |
| 32 | Display |
| 34 | Verfahren |

**Patentansprüche**

1. System (2) zur Bestimmung einer Reifenprofiltiefe D eines Fahrzeugreifens (4), aufweisend:

eine Signalempfangsschnittstelle (6),
eine erste Prozessoreinheit (8), und
eine Speichereinheit (10),
wobei die Signalempfangsschnittstelle (6) zum Empfang eines Messsignals M eines Beschleunigungssensors (12) des Fahrzeugreifens (4) ausgebildet ist, wobei das Messsignal M eine auf ein Reifenprofil (14) eines Laufstreifens (16) des Fahrzeugreifens (4) wirkende, radiale Beschleunigung A zumindest indirekt repräsentiert, wobei von der Speichereinheit (10) eine Referenzprofiltiefe E des Reifenprofils (14) gespeichert ist, wobei die erste Prozessoreinheit (8) konfiguriert ist, basierend auf dem Messsignal M ein Prozesssignal zu ermitteln, das einen Beschleunigungsgradienten B der auf das Reifenprofil (14) des Laufstreifens (16) des Fahrzeugreifens (4) oder der auf einen Innerliner des Fahrzeugreifens (4) wirkenden, radialen Beschleunigung A zumindest indirekt repräsentiert, wobei die erste Prozessoreinheit (8) konfiguriert ist, eine Umlaufzeit U des Fahrzeugreifens (4) basierend auf dem Messsignal M und/oder dem Prozesssignal zu ermitteln, wobei die erste Prozessoreinheit (8) konfiguriert ist, basierend auf dem Prozesssignal einen ersten Parameter $P_1$ zu ermitteln, der einen maximalen Beschleunigungsgradient $B_{max}$ während der Umlaufzeit U, einen minimalen Beschleunigungsgradient $B_{min}$ während der Umlaufzeit U oder einen Mittelwert aus dem maximalen und minimalen Beschleunigungsgradient $B_{max}$, $B_{min}$ während der Umlaufzeit U zumindest indirekt repräsentiert, wobei die erste Prozessoreinheit (8) konfiguriert ist, basierend auf dem Prozesssignal einen zweiten Parameter $P_2$ zu ermitteln, der entweder einen Zeitabstand Z zwischen dem maximalen und minimalen Beschleunigungsgradient $B_{max}$, $B_{min}$ während der Umlaufzeit U oder ein Verhältnis zwischen dem Zeitabstand Z und der Umlaufzeit U zumindest indirekt repräsentiert, und wobei die erste Prozessoreinheit (8) oder eine optionale, zweite Prozessoreinheit (18) des Systems (2) konfiguriert ist, die Reifenprofiltiefe D des Reifenprofils (14) des Laufstreifens (16) des Fahrzeugreifens (4) basierend auf der Referenzprofiltiefe E, dem ersten Parameter $P_1$ und dem zweiten Parameter $P_2$ zu bestimmen, **dadurch gekennzeichnet, dass** ein dreidimensionales Kennfeld (20) von der Speichereinheit (10) oder von einer optionalen, zweiten Speichereinheit (40) gespeichert ist, wobei das Kennfeld (20) mögliche Reifenprofiltiefen D in Abhängigkeit von möglichen Referenzprofiltiefen E, möglichen Größen für den ersten Parameter $P_1$ und möglichen Größen für den zweiten Parameter $P_2$ repräsentiert, und wobei die zum Bestimmen der Reifenprofiltiefe D vorgesehene Prozessoreinheit 8, 18 konfiguriert ist, die Reifenprofiltiefe D des Reifenprofils (14) des Laufstreifens (16) des Fahrzeugreifens (4) mittels des Kennfelds (20) und basierend auf der gespeicherten Referenzprofiltiefe E, dem ermittelten, ersten Parameter $P_1$ und dem ermittelten, zweiten Parameter $P_2$ zu bestimmen."

2. System (2) nach einem der vorhergehenden Ansprüche, **dadurch gekennzeichnet, dass** sich das Verhältnis zwischen dem Zeitabstand Z und der Umlaufzeit U auf einen Betrag der Zeitdifferenz zwischen dem Zeitabstand Z und der Umlaufzeit U bezieht und/oder dadurch bestimmt ist.

3. System (2) nach einem der vorhergehenden Ansprüche 1 , **dadurch gekennzeichnet, dass** sich das Verhältnis zwischen dem Zeitabstand Z und der Umlaufzeit U auf einen Betrag eines Quotienten von dem Zeitabstand Z zu der Umlaufzeit U, oder umgekehrt, bezieht und/oder dadurch bestimmt ist.

4. System (2) nach einem der vorhergehenden Ansprüche, **dadurch gekennzeichnet, dass** das System (2) eine Signalsendeschnittstelle (22) aufweist, die zum Aussenden eines Sendesignals ausgebildet ist, das die bestimmte Reifenprofiltiefe D des Reifenprofils (14) des Laufstreifens (16) des Fahrzeugreifens (4) repräsentiert.

5. Fahrzeug (24), aufweisend:

ein System (2) nach einem der vorhergehenden Ansprüche,
mehrere Fahrzeugräder (26) mit jeweils einem Fahrzeugreifen (4), und
einen Beschleunigungssensor (12), der einem der Fahrzeugreifen (4) zugeordnet und an diesem Fahrzeugreifen (4) derart befestigt ist, um eine auf ein Reifenprofil (14) eines Laufstreifens (16) des Fahrzeugreifens (4) wirkende Beschleunigung A in Radialrichtung R des Fahrzeugreifens (4) zumindest indirekt zu erfassen, wobei der Beschleunigungssensor (12) zur Erzeugung eines Messsignals M ausgebildet ist, das die erfasste Beschleunigung A repräsentiert,

wobei der Beschleunigungssensor (12) und die Signalempfangsschnittstelle (6) des Systems (2) derart gekoppelt sind, um das Messsignal M von dem Beschleunigungssensor (12) an die Signalempfangsschnittstelle (6) des Systems (2) zu übertragen, und

wobei das System (2) ausgebildet ist, die von der jeweiligen Prozessoreinheit (8, 18) bestimmte Reifenprofiltiefe D über ein Sendesignal an eine Steuereinheit (28) des Fahrzeugs (24) zu übertragen.

6. Fahrzeug (24) nach dem vorhergehenden Anspruch, **dadurch gekennzeichnet, dass** der Beschleunigungssensor (12) und die Signalempfangsschnittstelle (6) des Systems (2) telemetrisch gekoppelt sind oder über eine Signalleitung gekoppelt sind.

7. Fahrzeug (24) nach einem der vorhergehenden Ansprüche 5 bis 6, **dadurch gekennzeichnet, dass** das System (2) einer Karosserie (30) des Fahrzeugs (24) zugeordnet und/oder darin angeordnet sind.

8. Fahrzeug (24) nach einem der vorhergehenden Ansprüche 5 bis 6, **dadurch gekennzeichnet, dass** das System (2) an dem Fahrzeugreifen (4) angeordnet ist, an dem auch der Beschleunigungssensor (12) befestigt, wobei das System (2) die Signalsendeschnittstelle (22) aufweist, die auch zum Aussenden des Sendesignals per Funk an eine mit der Steuereinheit (28) des Fahrzeug (24) gekoppelten Funkempfangseinheit ausgebildet ist.

9. Fahrzeug (24) nach einem der vorhergehenden Ansprüche 5 bis 8 , **dadurch gekennzeichnet, dass** die Steuereinheit (28) konfiguriert ist, ein Alarmsignal zu erzeugen, wenn die mittels des Systems (2) bestimmte Reifenprofiltiefe D des Fahrzeugreifens (4) einen vorbestimmten Schwellwert erreicht und/oder unterschreitet.

10. Fahrzeug (24) nach dem vorhergehenden Anspruch, **dadurch gekennzeichnet, dass** das Fahrzeug (24) zum Ausgeben eines optischen und/oder akustischen Signals basierend auf dem Alarmsignal ausgebildet ist.

11. Verfahren (34) zur Bestimmung einer Reifenprofiltiefe D eines Fahrzeugreifens (4), aufweisend die Schritte:

g) Empfang eines Messsignals M eines Beschleunigungssensors (12) des Fahrzeugreifens (4) mittels einer Signalempfangsschnittstelle (6) eines Systems (2), wobei das Messsignal M eine auf ein Reifenprofil (14) eines Laufstreifens (16) des Fahrzeugreifens (4) wirkende, radiale Beschleunigung A zumindest indirekt repräsentiert, wobei eine Referenzprofiltiefe E des Reifenprofils (14) von einer Speichereinheit (10, 40) des Systems (2) gespeichert ist,

h) Ermitteln eines Prozesssignals basierend auf dem Messsignal M mittels einer ersten Prozessoreinheit (8) des Systems (2), so dass das Prozesssignal einen Beschleunigungsgradienten B der auf das Reifenprofil (14) des Laufstreifens (16) des Fahrzeugreifens (4) wirkenden Beschleunigung A zumindest indirekt repräsentiert,

i) Ermitteln einer Umlaufzeit U des Fahrzeugreifens (4) basierend auf dem Messsignal M und/oder dem Prozesssignal mittels der ersten Prozessoreinheit (8) des Systems (2),

j) Ermitteln eines ersten Parameters $P_1$ basierend auf dem Prozesssignal mittels der ersten Prozessoreinheit (8) des Systems (2), so dass der erste Parameter $P_1$ einen maximalen Beschleunigungsgradient $B_{max}$ während der Umlaufzeit U, einen minimalen Beschleunigungsgradient $B_{min}$ während der Umlaufzeit U oder einen Mittelwert aus dem maximalen und minimalen Beschleunigungsgradient $B_{max}$, $B_{min}$)während der Umlaufzeit U zumindest indirekt repräsentiert,

k) Ermitteln eines zweiten Parameters $P_2$ basierend auf dem Prozesssignal mittels der ersten Prozessoreinheit (8) des Systems (2), so dass der zweite Parameter $P_2$ entweder einen Zeitabstand Z zwischen dem maximalen und minimalen Beschleunigungsgradient $B_{max}$, $B_{min}$ während der Umlaufzeit U oder ein Verhältnis zwischen dem Zeitabstand Z und der Umlaufzeit U zumindest indirekt repräsentiert, und

l) Ermitteln der Reifenprofiltiefe D des Reifenprofils (14) des Laufstreifens (16) des Fahrzeugreifens (4) basierend auf der Referenzprofiltiefe E, dem ersten Parameter $P_1$ und dem zweiten Parameter $P_1$ mittels der ersten Prozessoreinheit (8) des Systems (2) oder mittels einer optionalen, zweiten Prozessoreinheit (18) des Systems (2).

12. Verfahren (34) nach dem vorhergehenden Anspruch, **dadurch gekennzeichnet, dass** ein dreidimensionales Kennfeld (20) von der Speichereinheit (10) des Systems (2) oder einer optimalen, weiteren Speichereinheit (40) des Systems (2) gespeichert ist, wobei das Kennfeld (20) mögliche Reifenprofiltiefen D in Abhängigkeit von möglichen Referenzprofiltiefen E, möglichen Größen für den ersten Parameter $P_1$ und möglichen Größen für den zweiten Parameter $P_2$ repräsentiert, und wobei die Reifenprofiltiefe D des Reifenprofils (14) des Laufstreifens (16) des Fahrzeugreifens (4) in Schritt f) mittels des Kennfelds (20) und basierend auf der gespeicherten Referenzprofiltiefe E, dem ermittelten, ersten Parameter $P_1$ und dem ermittelten, zweiten Parameter $P_1$ bestimmt wird.

**Claims**

1. System (2) for determining a tread depth D of a vehicle tyre (4), having:

   a signal reception interface (6),
   a first processor unit (8), and
   a memory unit (10),
   wherein the signal reception interface (6) is designed to receive a measurement signal M from an acceleration sensor (12) of the vehicle tyre (4), the measurement signal M at least indirectly representing a radial acceleration A acting on a tread pattern (14) of a tread (16) of the vehicle tyre (4),
   wherein the memory unit (10) stores a reference tread depth E of the tyre tread pattern (14),
   wherein the first processor unit (8) is configured to take the measurement signal M as a basis for determining a process signal that at least indirectly represents an acceleration gradient B of the radial acceleration A acting on the tyre tread pattern (14) of the tread (16) of the vehicle tyre (4) or of the radial acceleration A acting on an inner liner of the vehicle tyre (4),
   wherein the first processor unit (8) is configured to determine a revolution time U of the vehicle tyre (4) on the basis of the measurement signal M and/or the process signal,
   wherein the first processor unit (8) is configured to take the process signal as a basis for determining a first parameter $P_1$ that at least indirectly represents a maximum acceleration gradient $B_{max}$ during the revolution time U, a minimum acceleration gradient $B_{min}$ during the revolution time U or a mean value from the maximum and minimum acceleration gradients $B_{max}$, $B_{min}$ during the revolution time U,
   wherein the first processor unit (8) is configured to take the process signal as a basis for determining a second parameter $P_2$ that at least indirectly represents either an interval of time Z between the maximum and minimum acceleration gradients $B_{max}$, $B_{min}$ during the revolution time U or a ratio between the interval of time Z and the revolution time U, and
   wherein the first processor unit (8) or an optional second processor unit (18) of the system (2) is configured to ascertain the tread depth D of the tyre tread pattern (14) of the tread (16) of the vehicle tyre (4) on the basis of the reference tread pattern E, the first parameter $P_1$ and the second parameter $P_2$, **characterized in that** a three-dimensional family of characteristic curves (20) is stored by the memory unit (10) or by an optional second memory unit (40), wherein the family of characteristic curves (20) represents possible tread depths D on the basis of possible reference tread depths E, possible magnitudes for the first parameter $P_1$ and possible magnitudes for the second parameter $P_2$, and wherein the processor unit 8, 18 provided for ascertaining the reference tread depth D is configured to ascertain the reference tread depth D of the tread pattern (14) of the tread (16) of the vehicle tyre (4) by means of the family of characteristic curves (20) and on the basis of the stored reference tread depth E, the determined first parameter $P_1$ and the determined second parameter $P_2$.

2. System (2) according to one of the preceding claims, **characterized in that** the ratio between the interval of time Z and the revolution time U relates to an absolute value of the time difference between the interval of time Z and the revolution time U and/or is ascertained thereby.

3. System (2) according to either of preceding Claims 1, **characterized in that** the ratio between the interval of time Z and the revolution time U relates to an absolute value of a quotient of the interval of time Z and the revolution time U, or vice versa, and/or is ascertained thereby.

4. System (2) according to one of the preceding claims, **characterized in that** the system (2) has a signal transmission interface (22) designed to transmit a transmission signal that represents the ascertained reference tread depth D of the tread pattern (14) of the tread (16) of the vehicle tyre (4).

5. Vehicle (24), having:

   a system (2) according to one of the preceding claims,
   multiple vehicle wheels (26) having a respective vehicle tyre (4), and
   an acceleration sensor (12) that is associated with one of the vehicle tyres (4) and is mounted on this vehicle tyre (4) in such a way as to at least indirectly capture an acceleration A in the radial direction R of the vehicle tyre (4), which acceleration acts on a tread pattern (14) of a tread (16) of the vehicle tyre (4),
   wherein the acceleration sensor (12) is designed to generate a measurement signal M that represents the first acceleration A,
   wherein the acceleration sensor (12) and the signal reception interface (6) of the system (2) are coupled in such a way as to transmit the measurement signal M from the acceleration sensor (12) to the signal reception interface (6) of the system (2), and

wherein the system (2) is designed to transmit the tread depth D ascertained by the respective processor unit (8, 18) to a control unit (28) of the vehicle (24) by way of a transmission signal.

6. Vehicle (24) according to the preceding claim, **characterized in that** the acceleration sensor (12) and the signal reception interface (6) of the system (2) are telemetrically coupled or are coupled by way of a signal line.

7. Vehicle (24) according to either of preceding Claims 5 and 6, **characterized in that** the system (2) is associated with a bodywork (30) of the vehicle (24) and/or is arranged therein.

8. Vehicle (24) according to either of preceding Claims 5 and 6, **characterized in that** the system (2) is arranged on the vehicle tyre (4) on which the acceleration sensor (12) is also mounted, wherein the system (2) has the signal transmission interface (22), which is also designed to transmit the transmission signal by radio to a radio reception unit coupled to the control unit (28) of the vehicle (24).

9. Vehicle (24) according to one of preceding Claims 5 to 8, **characterized in that** the control unit (28) is configured to generate an alarm signal if the tread depth D of the vehicle tyre (4) ascertained by means of the system (2) reaches and/or falls short of a predetermined threshold value.

10. Vehicle (24) according to the preceding claim, **characterized in that** the vehicle (24) is designed to output a visual and/or audible signal on the basis of the alarm signal.

11. Method (34) for ascertaining a tread depth D of a vehicle tyre (4), having the steps of:

g) receiving a measurement signal M from an acceleration sensor (12) of the vehicle tyre (4) by means of a signal reception interface (6) of a system (2), the measurement signal M at least indirectly representing a radial acceleration A acting on a tread pattern (14) of a tread (16) of the vehicle tyre (4), a reference tread depth E of the tyre tread pattern (14) being stored by a memory unit (10, 40) of the system (2),

h) determining a process signal on the basis of the measurement signal M by means of a first processor unit (8) of the system (2) so that the process signal at least indirectly represents an acceleration gradient B of the acceleration A acting on the tread pattern (14) of the tread (16) of the vehicle tyre (4),

i) determining a revolution time U of the vehicle tyre (4) on the basis of the measurement signal M and/or the process signal by means of the first processor unit (8) of the system (2),

j) determining a first parameter $P_1$ on the basis of the process signal by means of the first processor unit (8) of the system (2) so that the first parameter $P_1$ at least indirectly represents a maximum acceleration gradient $B_{max}$ during the revolution time U, a minimum acceleration gradient $B_{min}$ during the revolution time U or a mean value from the maximum and minimum acceleration gradients $B_{max}$, $B_{min}$ during the revolution time U,

k) determining a second parameter $P_2$ on the basis of the process signal by means of the first processor unit (8) of the system (2) so that the second parameter $P_2$ at least indirectly represents either an interval of time Z between the maximum and minimum acceleration gradients $B_{max}$, $B_{min}$ during the revolution time U or a ratio between the interval of time Z and the revolution time U, and

l) determining the tread depth D of the tread pattern (14) of the tread (16) of the vehicle tyre (4) on the basis of the reference tread depth E, the first parameter $P_1$ and the second parameter $P_2$ by means of the first processor unit (8) of the system (2) or by means of an optional second processor unit (18) of the system (2).

12. Method (34) according to the preceding claim, **characterized in that** a three-dimensional family of characteristic curves (20) is stored by the memory unit (10) of the system (2) or by an optimum, further memory unit (40) of the system (2), wherein the family of characteristic curves (20) represents possible tread depths D on the basis of possible reference tread depths E, possible magnitudes for the first parameter $P_1$ and possible magnitudes for the second parameter $P_2$, and wherein the reference tread depth D of the tread pattern (14) of the tread (16) of the vehicle tyre (4) is ascertained in step f) by means of the family of characteristic curves (20) and on the basis of the stored reference tread depth E, the determined first parameter $P_1$ and the determined second parameter $P_2$.

**Revendications**

1. Système (2) permettant de déterminer une profondeur de sculpture de pneu D d'un pneu de véhicule (4), présentant :

une interface de réception de signal (6),
une première unité de processeur (8), et
une unité de mémoire (10),
dans lequel l'interface de réception de signal (6) est réalisée pour recevoir un signal de mesure M d'un capteur d'accélération (12) du pneu de véhicule (4), le signal de mesure M représentant au moins indirectement une accélération radiale A agissant sur la sculpture de pneu (14) d'une bande de roulement (16) du pneu de véhicule (4),
dans lequel l'unité de mémoire (10) mémorise une profondeur de sculpture de référence E de la sculpture de pneu (14),
dans lequel la première unité de processeur (8) est configurée pour établir sur la base du signal de mesure M un signal de traitement qui représente au moins indirectement un gradient d'accélération B de l'accélération radiale A agissant sur la sculpture de pneu (14) de la bande de roulement (16) du pneu de véhicule (4) ou sur une doublure interne du pneu de véhicule (4),
dans lequel la première unité de processeur (8) est configurée pour établir un temps d'une révolution U du pneu de véhicule (4) sur la base du signal de mesure M et/ou du signal de traitement,
dans lequel la première unité de processeur (8) est configurée pour établir sur la base du signal de traitement un premier paramètre $P_1$ qui représente au moins indirectement un gradient d'accélération maximale $B_{max}$ pendant le temps d'une révolution U, un gradient d'accélération minimale $B_{min}$ pendant le temps d'une révolution U ou une moyenne des gradients d'accélération maximale et minimale $B_{max}$, $B_{min}$ pendant le temps d'une révolution U,
dans lequel la première unité de processeur (8) est configurée pour établir sur la base du signal de traitement un deuxième paramètre $P_2$ qui représente au moins indirectement soit un intervalle de temps Z entre les gradients d'accélération maximale et minimale $B_{max}$, $B_{min}$ pendant le temps d'une révolution U ou un rapport entre l'intervalle de temps Z et le temps d'une révolution U, et
dans lequel la première unité de processeur (8) ou une deuxième unité de processeur optionnelle (18) du système (2) est configurée pour déterminer la profondeur de sculpture de pneu D de la sculpture de pneu (14) de la bande de roulement (16) du pneu de véhicule (4) sur la base de la profondeur de sculpture de référence E, du premier paramètre $P_1$ et du deuxième paramètre $P_2$,
**caractérisé en ce qu'**un diagramme caractéristique tridimensionnel (20) est mémorisé par l'unité de mémoire (10) ou par une deuxième unité de mémoire optionnelle (40), le diagramme caractéristique (20) représentant des profondeurs de sculpture de pneu D possibles en fonction de profondeurs de sculpture de référence E possibles, de grandeurs possibles pour le premier paramètre $P_1$ et de grandeurs possibles pour le deuxième paramètre $P_2$, et dans lequel, l'unité de processeur 8, 18 prévue pour déterminer la profondeur de sculpture de pneu D est configurée pour déterminer la profondeur de sculpture de pneu D de la sculpture de pneu (14) de la bande de roulement (16) du pneu de véhicule (4) au moyen du diagramme caractéristique (20) et sur la base de la profondeur de sculpture de référence E mémorisée, du premier paramètre $P_1$ établi et du deuxième paramètre $P_2$ établi.

2. Système (2) selon l'une quelconque des revendications précédentes, **caractérisé en ce que** le rapport entre l'intervalle de temps Z et le temps d'une révolution U se réfère à une quantité de la différence de temps entre l'intervalle de temps Z et le temps d'une révolution U et/ou est déterminé par celle-ci.

3. Système (2) selon l'une quelconque des revendications précédentes, **caractérisé en ce que** le rapport entre l'intervalle de temps Z et le temps d'une révolution U se réfère à une quantité d'un quotient de l'intervalle de temps Z au temps d'une révolution U, ou vice versa, et/ou est déterminé par celle-ci.

4. Système (2) selon l'une quelconque des revendications précédentes, **caractérisé en ce que** le système (2) présente une interface d'émission de signal (22) qui est réalisée pour émettre un signal d'émission qui représente la profondeur de sculpture de pneu D déterminée de la sculpture de pneu (14) de la bande de roulement (16) du pneu de véhicule (4).

5. Véhicule (24), présentant :

un système (2) selon l'une quelconque des revendications précédentes,
plusieurs roues de véhicule (26) pourvues chacune d'un pneu de véhicule (4), et
un capteur d'accélération (12) qui est associé à l'un des pneus de véhicule (4) et est fixé à ce pneu de véhicule (4) de façon à détecter au moins indirectement une accélération A agissant sur une sculpture de pneu (14) d'une bande de roulement (16) du pneu de véhicule (4) dans la direction radiale R du pneu de véhicule (4),
dans lequel le capteur d'accélération (12) est réalisé pour générer un signal de mesure M qui représente l'accélération A détectée,

dans lequel le capteur d'accélération (12) et l'interface de réception de signal (6) du système (2) sont couplés de façon à transmettre le signal de mesure M du capteur d'accélération (12) à l'interface de réception de signal (6) du système (2), et

dans lequel le système (2) est réalisé pour transmettre la profondeur de sculpture de pneu D déterminée par l'unité de processeur (8, 18) respective par l'intermédiaire d'un signal d'émission à une unité de commande (28) du véhicule (24).

6. Véhicule (24) selon la revendication précédente, **caractérisé en ce que** le capteur d'accélération (12) et l'interface de réception de signal (6) du système (2) sont couplés de manière télémétrique ou sont couplés par l'intermédiaire d'une ligne de signal.

7. Véhicule (24) selon l'une quelconque des revendications précédentes 5 à 6, **caractérisé en ce que** le système (2) est associé à une carrosserie (30) du véhicule (24) et/ou y est disposé.

8. Véhicule (24) selon l'une quelconque des revendications précédentes 5 à 6, **caractérisé en ce que** le système (2) est disposé sur le pneu de véhicule (4) sur lequel est fixé également le capteur d'accélération (12), le système (2) présentant l'interface d'émission de signal (22) qui est également réalisée pour émettre le signal d'émission par radio à une unité de réception radio couplée à l'unité de commande (28) du véhicule (24).

9. Véhicule (24) selon l'une quelconque des revendications précédentes 5 à 8, **caractérisé en ce que** l'unité de commande (28) est configurée pour générer un signal d'alarme lorsque la profondeur de sculpture de pneu D du pneu de véhicule (4), déterminée au moyen du système (2), atteint et/ou est inférieure à une valeur seuil prédéterminée.

10. Véhicule (24) selon la revendication précédente, **caractérisé en ce que** le véhicule (24) est réalisé pour émettre un signal optique et/ou acoustique sur la base du signal d'alarme.

11. Procédé (34) permettant de déterminer une profondeur de sculpture de pneu D d'un pneu de véhicule (4), présentant les étapes consistant à :

g) recevoir un signal de mesure M d'un capteur d'accélération (12) du pneu de véhicule (4) au moyen d'une interface de réception de signal (6) d'un système (2), le signal de mesure M représentant au moins indirectement une accélération radiale A agissant sur une sculpture de pneu (14) d'une bande de roulement (16) du pneu de véhicule (4), une profondeur de sculpture de référence E de la sculpture de pneu (14) étant mémorisée par une unité de mémoire (10, 40) du système (2),

h) établir un signal de traitement sur la base du signal de mesure M au moyen d'une première unité de processeur (8) du système (2) de sorte que le signal de traitement représente au moins indirectement un gradient d'accélération B de l'accélération agissant sur la sculpture de pneu (14) de la bande de roulement (16) du pneu de véhicule (4),

i) établir un temps d'une révolution U du pneu de véhicule (4) sur la base du signal de mesure M et/ou du signal de traitement au moyen de la première unité de processeur (8) du système (2),

j) établir un premier paramètre $P_1$ sur la base du signal de traitement au moyen de la première unité de processeur (8) du système (2) de sorte que le premier paramètre $P_1$ représente au moins indirectement un gradient d'accélération maximale $B_{max}$ pendant le temps d'une révolution U, un gradient d'accélération minimale $B_{min}$ pendant le temps d'une révolution U ou une moyenne des gradients d'accélération maximale et minimale $B_{max}$, $B_{min}$ pendant le temps d'une révolution U,

k) établir un deuxième paramètre $P_2$ sur la base du signal de traitement au moyen de la première unité de processeur (8) du système (2) de sorte que le deuxième paramètre $P_2$ représente au moins indirectement soit un intervalle de temps Z entre les gradients d'accélération maximale et minimale $B_{max}$, $B_{min}$ pendant le temps d'une révolution U, soit un rapport entre l'intervalle de temps Z et le temps d'une révolution U, et

l) établir la profondeur de sculpture de pneu D de la sculpture de pneu (14) de la bande de roulement (16) du pneu de véhicule (4) sur la base de la profondeur de sculpture de référence E, du premier paramètre $P_1$ et du deuxième paramètre $P_2$ au moyen de la première unité de processeur (8) du système (2) ou au moyen d'une deuxième unité de processeur optionnelle (18) du système (2).

12. Procédé (34) selon la revendication précédente, **caractérisé en ce qu'**un diagramme caractéristique tridimensionnel (20) est mémorisé par l'unité de mémoire (10) du système (2) ou par une autre unité de mémoire optionnelle (40) du système (2), le diagramme caractéristique (20) représentant des profondeurs de sculpture de pneu D possibles en fonction de profondeurs de sculpture de référence E possibles, de grandeurs possibles pour le premier paramètre $P_1$ et de grandeurs possibles pour le deuxième paramètre $P_2$, et dans lequel la profondeur de sculpture de pneu D de la sculpture de pneu (14) de la bande de roulement (16) du pneu de véhicule (4) est déterminée à l'étape f) au moyen du diagramme caractéristique (20) et sur la base de la profondeur de sculpture de référence E mémorisée, du premier paramètre $P_1$ établi et du deuxième paramètre $P_2$ établi.

Fig. 1

EP 3 663 107 B1

Fig. 2

Fig. 3

Fig. 4

Fig. 5

Fig. 6

Fig. 7

Fig. 8

**IN DER BESCHREIBUNG AUFGEFÜHRTE DOKUMENTE**

**In der Beschreibung aufgeführte Patentdokumente**

- JP 2013136297 A
- DE 102015216212 A1